# EUROPEAN PATENT APPLICATION

(11) **EP 0 714 796 A1**
(43) Date of publication of application: **05.06.1996**
(21) Application number: 95560005.1
(22) Date of filing: 23.11.1995
(51) Int. Cl.: B60G 17/056, B62D 61/12

(54) **Vehicle wheel elevation valve with automatic lowering**

(30) Priority: 24.11.1994 ES 9402420
(71) Applicant: ACCESORIOS Y ELEVADORES VALENCIA, S.L., E-46135 Albalat Dels Sorells (ES)
(72) Inventor: Bustos Navarro, Fermin, E-46135 Albalat dels Sorells (ES)
(74) Representative: Sanz-Bermell Martinez, Alejandro

(57) **Abstract**

This comprises one sole unit which structures three distributors: main, drive operation, automatic lowering, a flow limiting valve and a stabilizing tank, with each of the distributors being able to take two positions, making or breaking the connections between the different communication channels of the pressure lines, in accordance with the presence or absence of a secondary piloting pressure, a result in turn of manual operation or a programmed automatic response, having seven ports for communication with the exterior which connect with the right and left pressure lines of the suspension and which connect the lifting mechanism.

For application in the manufacture of valves for automatic lowering and manual lifting and lowering of axles of semi-trailers with several axles.

## Description

Vehicle wheel lifting valve with automatic lowering.

The sector of the technique used in this patent is for the devices and apparatus for lifting wheels in transport vehicles, especially semi-trailers with several axles.

Statement of the prior state of the art. The technique of lifting vehicle wheels on semi-trailers is well known. The reason for this requirement lies in reasons of an legislative nature, and technical grounds. The legislative reasons stem from laws which require certain characteristics in semi-trailers, in accordance with their maximum authorized weight, or, amounting to the same thing, their load capacity. Furthermore, the technical reasons stem from the need for support, braking, damping, which are required for semi-trailers by the greater loads carried. There are already several systems, especially manual ones, for carrying out the function of lifting or producing the automatic lowering of the wheels. As a specially relevant antecedent there are multiple valves, formed of several elements which carry out the operation concerning us in the invention patent described below by means of the interconnection of their parts. The disadvantage of said sets of valves stems from the large number of elements and the means for letting the pressure through and cutting it off, as several of these devices are needed.

The subject of this invention is a vehicle wheel lifting valve with automatic lowering, formed of a unit fitted with interconnections for each one of the pressure lines both for loading and unloading, so that this has an automatic function and a manual function for times when it is particularly convenient to operate the raising or lowering of the corresponding axle, with each of the controls, either manual or automatic being connected with one sole movement of a manual handle.

In order to make the following explanation clearer, six sheets of drawings are enclosed, representing the essence of this invention in seven figures.

Figure 1 shows a total diagram of the installation in accordance with the valve.

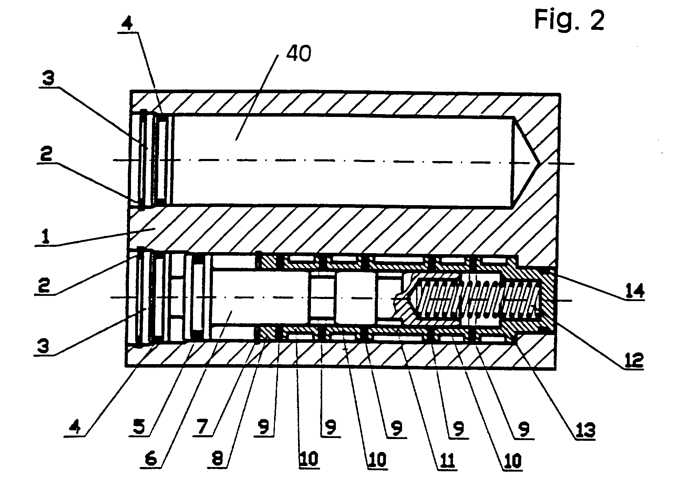

Figure 2 shows a detail of one of the parts of the valve, which has the stabilizing tank and the main distributor.

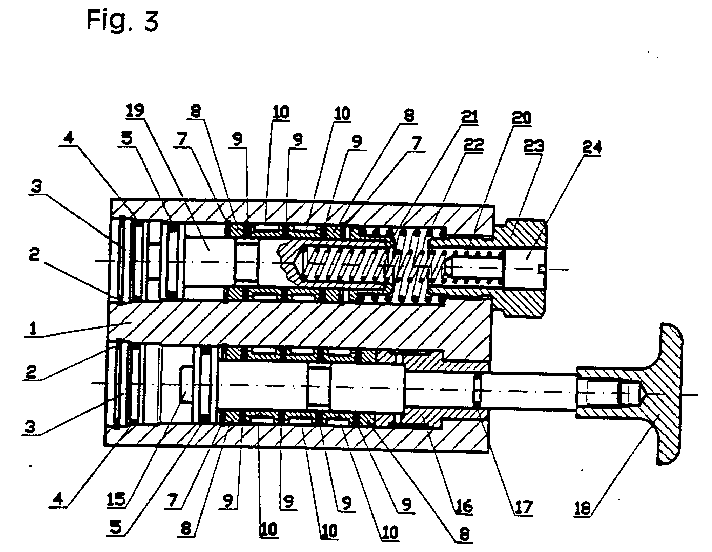

Figure 3 shows a detail of the part of the valve which shows the drive operation distributor and the automatic lowering distributor.

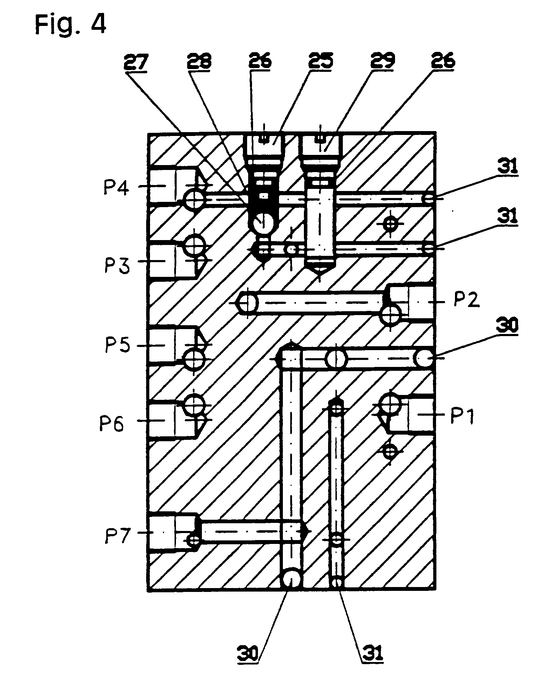

Figure 4 shows a detail of the connections of the valve body.

Figure 5 shows a diagram of the valve operation in automatic lowering position.

Figure 6 shows a diagram of the operation of the valve in the raised axle position with no automatic lowering pressure.

Figure 7 shows a diagram of the operation of the valve in rest position with the axle lowered.

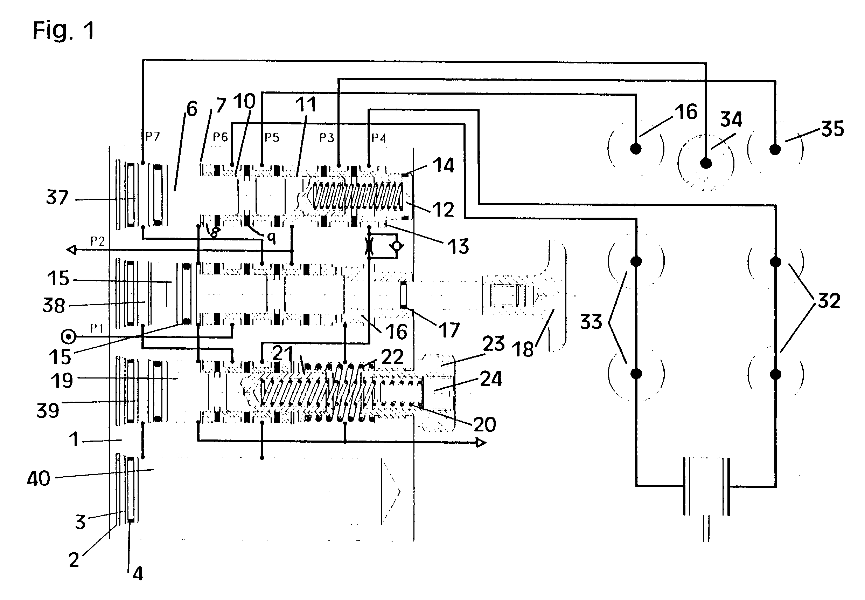

In said figures 1 is the body of the valves, 2 the external Seeger rings, 3 the valve cover, 4 the external o rings, 5 the internal 0 rings, 6 the rack I and 7 the internal Seeger rings, 8 the final spacers, 9 the joints of the valves, 10 the spacers of the valve joints, 11 the special spacer, 12 the spring, 13 the closure of valve I, 14 the o ring, 15 the rack II, with 16 being the closure of valve II and 17 the o ring, 18 the drive operation knob and 19 the rack III; with 20 being the spring, 21 the spring holder, 22 the spring, 23 the closure of valve II, 24 the regulating screw, 25 the plug, 26 the o rings, 27 the check ball, 28 the spring, 29 the restrictor, 30 being the ball stoppers, 31 the ball stoppers, 32 the right air suspension bell of the non-lifting axles, 33 the left diapresses of the non-liftable axles, 34 the lifting mechanism, 35 the right diapress of the lifting axles, 36 the left diapress of the lifting axle, 37 the main distributor, 38 the drive operation distributor, 39 the automatic lowering distributor, 40 the stabilizing tank, 41 the flow limiting valve. Also shown are the communication ports, namely, P1, the inlet for air under pressure, P2 the atmospheric outlet for escaping air, with P3 being the connection circuit to the right diapress of the axle to be lifted, P4 the pressure connection with the right suspension line, P5 the connection of the left diapress of the axle to be lifted, P6 the pressure connection with the left suspension line and P7 the connection to the lifter.

This valve acts in the following way: there is a supply pressure in the circuit coming from the corresponding truck, which maintains the pressure of the permanent suspension of the truck, which according to the diagram in figures 1, 5, 6, and 7 supplies the right diapresses 32 and the left diapresses 33, connected respectively to the connections P4 and P6 of the valve.

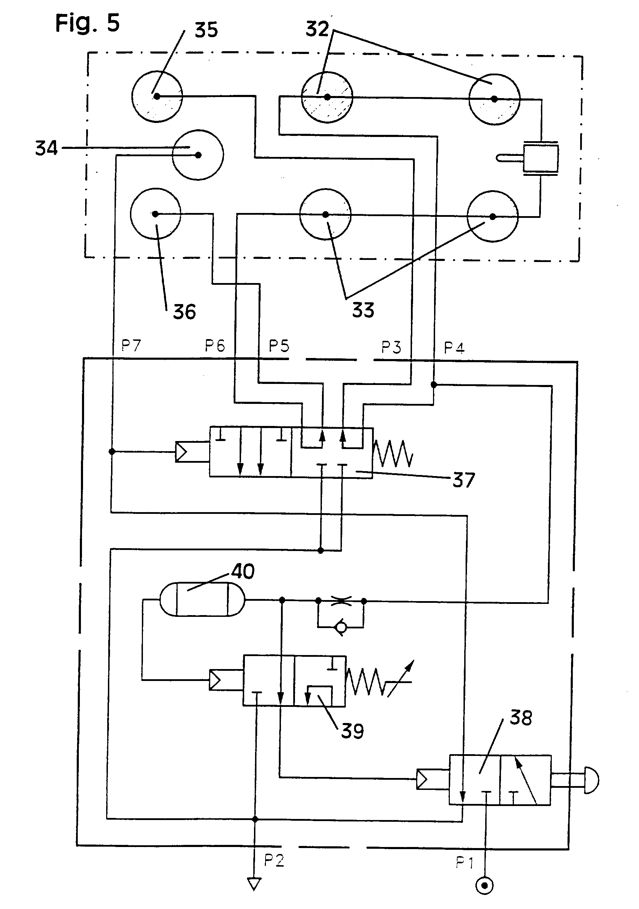

According to figure 5, an increase in the weight of the semi-trailer is detected by the automatic lowering distributor 39, set after the stabilizing tank 40, and the flow limiting valve 41, so that there is a change in position in the drive operation distributor 38, and a modification in the circuit, emptying the pressure from the lifter 34. In this position, there is a movement of the main distributor 37, which by moving through the absence of pressure in its piloting line, produces the connection of the circuit which supplies the pressure in the diapresses of the axles of the wheels to be lifted 35 and 36, in accordance with a balance of pressure with the corresponding lines 32 and 33, the axle remaining in the lowered position.

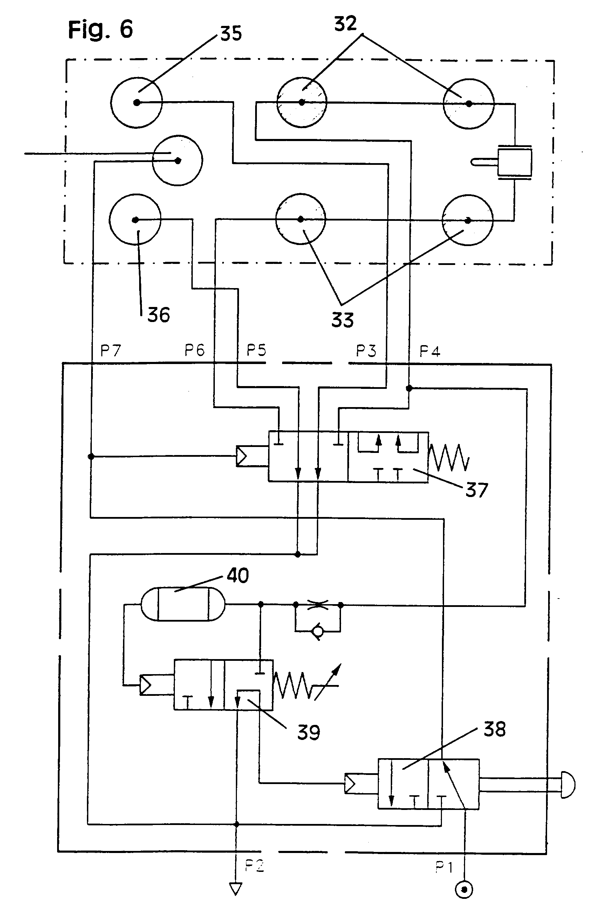

According to figure 6, which represents the operation of the valve in the raised axle position without any automatic lowering action, pressure P1 is connected to the main distributor 37, which by moving has interrupted the pressure communication between the lines which supply the diapresses 32 and the diapress 35, as well as between the diapresses 33 and the diapress 36; the lifter 34 has pressure, so that the corresponding axle stays up. The automatic lowering distributor 39 is in the rest position without activation through overpressure, so that it does not drive the drive operation distributor 38, which means that the lifted axle does not go down.

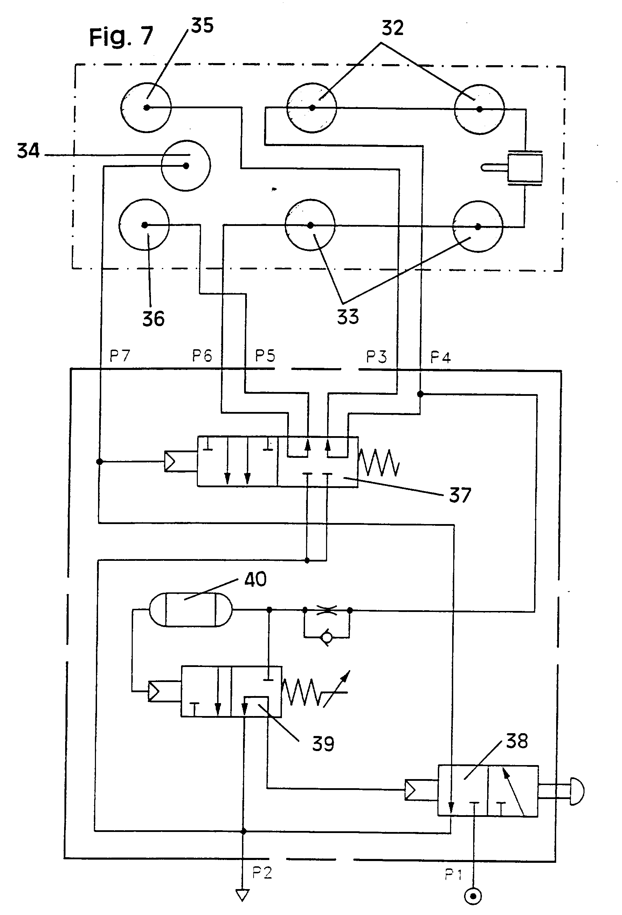

According to figure 7, which shows a diagram of the operation of the valve in rest position with the wheel axle down, the distributor 37, according to line P7 is decompressed, with an exit across the drive operation distributor 38 to the exterior through P2, and consequently the pressure of the suspension lines determines the fact that diapresses 35 and 36 are in connection with the respective pressure lines 32 and 33, the lifter 34 being decompressed for the same reason.

In accordance with the explanation above, the valve which is the subject of this report can at full load determine voluntary momentary lifting, can determine voluntary lowering under load or unloaded, and in any event always determines automatic lowering when the semi-trailer is sufficiently heavily loaded.

This is for industrial application in the manufacture of valves for automatic lowering, and manual lifting and lowering of axles for semi-trailers with several axles.

## Claims

1. Valve for lifting vehicle wheels with automatic lowering, characterized by being made up of one sole unit which structures three distributors, namely, one main distributor (37), a drive operation distributor (38) an automatic lowering distributor (39) a flow limiting valve (41) and a stabilizing tank (40); each one of the distributors (37, 38, 39) can take up two positions by making or breaking the connections between the different channels of communication of the pressure lines, in accordance with the existence or absence of a secondary pilot pressure, a consequence in turn of a manual drive operation or an automatic programmed response; the valve has seven ports for communication with the outside, P4 and P6 which respectively connect with the right and left pressure lines of the suspension (32, 33); P3 and P5 which respectively connect the right and left diapresses of the axle to be lifted (35, 36); P7 which connects the lifting mechanism (34), P1 which connects with the release to atmospherical pressure; there is internal communication between the connections P3 and P4, between connections P5 and P6, and between connections P7 and P2 in the position in which the axle of the wheels to be lifted is in downward motion, the lifting determining the modification of the internal communications of the valve so that connections P4 and P6 are independently blocked, making the simultaneous connection of P3 and P5 with P2 and with P7 connecting to P1.

2. An automatic valve, according to the first claim, characterized in that the drive operation distributor (38) is formed of a set of three ways and two positions with manual drive operation in both senses of lifting and lowering the axle, and furthermore with automatic piloting in one sole direction with automatic lowering of the axle as a function of the vehicle's load, which relates the lifting mechanism 34 and the piloting of the distributor 37 with the connection to release P2 with alternative inversion of the circuit with the connection to the supply pressure line P1.

3. Automatic valve, according to claim 1, characterized in that the main distributor (37) is made up of a set of six ways, and two positions, with pneumatic action of the pilot from the distributor (38) and return by spring action and which individually relates the diapresses of the axle to be lifted (35, 36) with their corresponding suspension pressure lines (32, 33), modifying the circuits by connection of the diapresses (35, 36) to the atmospheric release (P2), leaving connections P4 and P6 of the suspension lines (32, 33) closed, which acquires two alternative positions relating the lifting mechanism (34) with the diapresses (35, 36) which are connected to the pressure lines (32, 33) respectively.

4. Automatic valve, according to claim 1, characterized in that the automatic lowering distributor (39) is made up of a set of three ways and two positions kept in its initial position by an adjustable tension spring and pneumatically piloted automatically when it reaches a predetermined value for the pressure existing in the connection, for example, P4, a pressure value which is interpreted after having been stabilized by the joint action of the flow limiting valve (41) and the stabilizing tank (40); in said action the distributor (39) gives way to the pressure signal which is piloted by the control distributor (38) to move this if it has not already done so towards the axle lowering position.
